# EUROPEAN PATENT APPLICATION

(11) **EP 4 838 662 A1**
(43) Date of publication of application: **11.11.2026**
(21) Application number: 24799113.6
(22) Date of filing: 06.03.2024
(51) Int. Cl.: H01M 50/264, H01M 10/0585, H01M 50/102

(54) **SECONDARY BATTERY**

(30) Priority: 06.12.2023 KR 20230175172
(71) Applicant: Samsung SDI Co., Ltd., Suwon-si, Gyeonggi-do (KR)
(72) Inventor: BAE, Su Bin, Suwon-si, Gyeonggi-do 150-20 (KR); KIM, Sang Hun, Suwon-si, Gyeonggi-do 150-20 (KR); KIM, Hyun Kyu, Suwon-si, Gyeonggi-do 150-20 (KR)
(74) Representative: Gulde & Partner
(86) International application number: PCT/KR2024/002914
(87) International publication number: WO 2025/121549

(57) **Abstract**

A secondary battery includes an electrode assembly including a first electrode plate, a second electrode plate, and a separator, a case configured to accommodate the electrode assembly, and a cap assembly coupled to an opened upper side of the case. A support structure is disposed and fixed to a lower end of the electrode assembly, and the support structure is supported to be in contact with a lower bottom surface of the case.

## Description

### TECHNICAL FIELD

The present disclosure relates to a secondary battery.

### BACKGROUND ART

Secondary batteries are chargeable and dischargeable batteries, unlike primary batteries that are not chargeable. Low-capacity secondary batteries are used in portable small electronic devices such as smart phones, feature phones, notebook computers, digital cameras, and camcorders, and large-capacity secondary batteries are widely used for a power source and power storage for driving a motor, such as hybrid vehicles, electric vehicles, and the like.

Such secondary batteries are manufactured in various shapes such as a cylindrical type, a prismatic type, and a pouch type. An electrode assembly, which is provided by interposing a separator between positive and negative electrode plates, and an electrolyte are embedded and installed in a case, and a cap plate is installed in the case.

The above-described information disclosed in the technology that serves as the background of the present disclosure is only for improving understanding of the background of the present disclosure and thus may include information that does not constitute the related art.

### DISCLOSURE OF THE INVENTION

### TECHNICAL PROBLEM

Aspects of some embodiments of the present disclosure provide a secondary battery in which a high-capacity electrode assembly stack is fixed and supported inside a case to improve stability and productivity.

However, the technical problem to be solved by the present disclosure is not limited to the above problem, and other problems not mentioned will be clearly understood by those skilled in the art from the description of the invention described below.

### TECHNICAL SOLUTION

According to some embodiments, a secondary battery includes: an electrode assembly including a first electrode plate, a second electrode plate, and a separator; a case configured to accommodate the electrode assembly; and a cap assembly coupled to an opened upper side of the case, wherein a support structure is disposed and fixed to a lower end of the electrode assembly, and the support structure is supported to be in contact with a lower bottom surface of the case.

The electrode assembly may be provided by repeatedly stacking the first electrode plate and the second electrode plate with the separator therebetween.

The support structure may have a planar shape corresponding to that of a lower end of the electrode assembly and have a height corresponding to a gap between the lower end of the electrode assembly and the lower bottom surface of the case.

The support structure may be made of a high-performance plastic material.

The high-performance plastic material may include engineering plastic.

The support structure may have pores, and each of the pores may have a diameter of about 10 mm or less.

A resin-based binder may be applied to at least one place on a top surface of the support structure to adhere to a lower end of the electrode assembly.

### ADVANTAGEOUS EFFECTS

According to the present disclosure, the electrode assembly stack may be fixed inside the case to suppress the movement of the stack and improve the welding failure between the case and the stack, thereby improving the stability and the productivity.

However, the effects that are capable of being achieved through the present disclosure are not limited to the above-described effects, and other technical effects not mentioned can be clearly understood by those skilled in the art from the description of the invention described below.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings;
FIG. 1 illustrates a perspective view of a secondary battery according to embodiments;
FIG. 2 illustrates an exploded perspective view of FIG. 1;
FIGS. 3A and 3B illustrate schematic conceptual views of only a case, an electrode assembly, and a support structure in FIG. 1; and
FIG. 4 illustrates cross-sectional and plan views of the support structure applied to the secondary battery according to embodiments.

### MODE FOR CARRYING OUT THE INVENTION

Hereinafter, some embodiments of the present disclosure will be described below in more detail with reference to the accompanying drawings. The terms used in the following description and claims are not limited to their dictionary meanings, but are merely used to enable a clear and consistent understanding of the invention. Accordingly, it should be apparent to those skilled in the art that the following description of embodiments of the present invention is provided for illustration purpose only and not for the purpose of limiting the invention as defined by the appended claims and their equivalents. Thus, because the embodiments described in this specification and the configurations shown in the drawings are only one most preferred embodiment of the present invention and do not represent all of the technical ideas of the present invention, it should be understood that there may be various equivalents and modifications that can be substituted for them at the time of this application.

Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

In addition, the shapes and the sizes of elements in accompanying drawings will be exaggerated for more apparent description. In addition, the same reference numbers may be assigned to the same components in different embodiments.

The reference to two objects of comparison being 'the same' means 'substantially the same'. Therefore, substantially identical may include a deviation that is considered to a low level in the art, for example, a deviation of less than 5%. In addition, uniformity of a parameter on a certain area may mean uniformity from an average perspective.

It will be understood that although the terms of first and second are used herein to describe various elements, these elements should not be limited by these terms. These terms are only used to distinguish one component from another component, and unless specifically stated to the contrary, the first component may also be a second component.

Throughout this specification, unless specifically referred to the contrary, each component may be singular or plural.

An arrangement of any component on an upper portion (or lower portion) of a component or on a top (or bottom) of a component means that any component is placed in contact with a top surface (or bottom surface of the component, as well as other elements are interposed between the element and any element disposed above (or below) the element.

In addition, if a component is described as being "linked", "coupled", or "connected" to another component, it should be understood that the above components may be directly connected or connected to each other, but other components may be "interposed" between each component, or each component may be "linked", "coupled", or "connected" through another component. Also, in this specification below, if any portion is referred to as being "electrically connected" to another portion, it should be understood that the former can be "directly connected" to the latter, or "connected" to the latter via an intervening member.
- Addition/deletion depending on the contents of the invention among the above contents that are commonly written

If referring to "A and/or B" throughout the specification, this means A, B or A and B, unless specifically stated to the contrary. That is, "and/or" includes all or any combination of the plurality of listed items. If referring to "C to D", this means not less than C and not more than D, unless otherwise specified.

The terms used in this specification are for describing embodiments of the present disclosure and are not intended to limit the disclosure.

In some embodiments of the [cylindrical/prismatic/pouch]-type battery according to an embodiment of the present disclosure, one of the prismatic/pouch/circular batteries is selected, and the selected battery is described as having a general structure, and for commonly applied technologies, describe the general structure of prismatic/pouch/round cells.

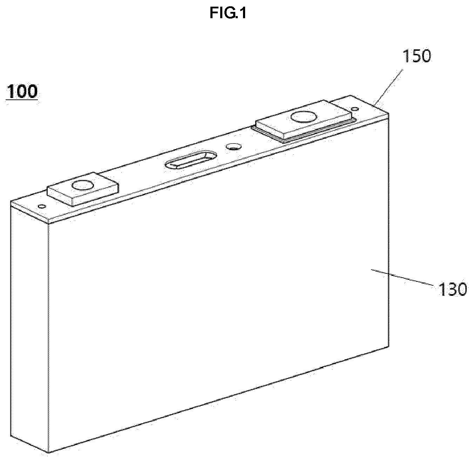

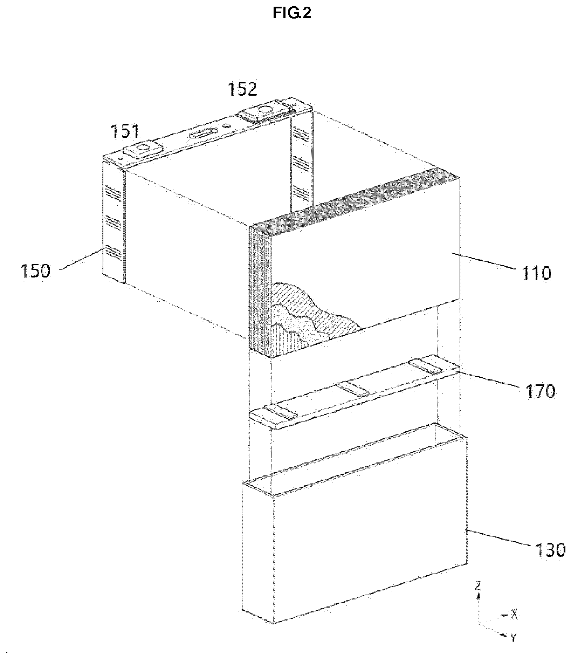

As illustrated in FIGS. 1 and 2, a secondary battery 100 according to embodiments may include an electrode assembly 110, a case 130, and a cap plate 150.

The electrode assembly 110 may be provided by stacking a stack of a first electrode plate, a separator, and a second electrode plate, each of which is provided in a thin plate or film shape. In some embodiments, the electrode assembly 110 is manufactured by repeatedly stacking the first electrode plate and the second electrode plate with the separator therebetween.

In the stacked electrode assembly 110, if the battery is implemented, the separator may be contacted to be in contact with a positive electrode plate (e.g., the first electrode plate) and a negative electrode plate (e.g., the second electrode plate), thereby causing short circuit. To prevent this, the separator may be stacked in a state adhering with the positive electrode plate. In some embodiments, the negative electrode plate may be disposed above the positive electrode plate on which the separator adheres to each of both surfaces thereof, and the positive electrode plate on which the separator adheres to each of both surfaces thereof may be disposed above the negative electrode plate. Then, the negative electrode plate may be disposed above the positive electrode, and then, the positive electrode plate on which the separator adheres to a bottoms surface thereof may be disposed above the negative electrode plate. As a result, the electrode assembly 110 may have a structure in which the positive electrode plate, the separator, and the negative electrode plate are sequentially stacked.

In some embodiments, the electrode assembly 110 may be stacked so that one or more electrode assemblies 110 are adjacent to each other and accommodated in the case 130. In some embodiments, the number of electrode assemblies 110 may not be limited thereto. In some embodiments, the first electrode plate of the electrode assembly 110 may serve as a negative electrode, and the second electrode plate may serve as a positive electrode. In some embodiments, the first electrode plate may serve as a negative electrode, and the second electrode plate may serve as a positive electrode.

The first electrode plate may be formed by applying a first electrode active material such as graphite or carbon to a first electrode current collector plate made of a metal foil such as copper, a copper alloy, nickel, or a nickel alloy, and may include a first electrode tab (or first non-coating portion) that is not coated with the first electrode active material. The first electrode tab may serve as a path for a current flow between the first electrode plate and a first current collector. In some embodiments, the first electrode tab may be provided by being cut in advance to protrude to one side if the first electrode plate is manufactured and may protrude more to one side than a separator without separate cutting.

The second electrode plate may be provided by applying a second electrode active material such as transition metal oxide to a second electrode current collector plate made of metal foil such as aluminum or an aluminum alloy, and may include a second electrode tab (or second non-coating portion) that is not coated with the second electrode active material. The second electrode tab may be a passage through which current flow between the second electrode plate and a second current collector. In some embodiments, the second electrode tab may be provided by being cut in advance to protrude to the other side if the second electrode plate is manufactured and may protrude more to the other side than the separator without separate cutting.

In some embodiments, the first electrode tab may be disposed on a side surface of a left end of the electrode assembly 110, and the second electrode tab may be disposed on a side surface of a right end of the electrode assembly 110 or disposed on one surface in the same direction. Here, the left and right sides are for convenience of explanation based on the secondary battery 100 illustrated in FIG. 1, and the position of the secondary battery 100 may be changed if the secondary battery 100 rotates left and right or up and down.

A first electrode tab of the first electrode plate and a second electrode tab of the second electrode plate may be disposed on both ends of the electrode assembly 110 as described above, respectively. In some embodiments, the electrode assembly 110 may be accommodated in the case 130 together with the electrolyte. In some embodiments, in the electrode assembly 110, the first current collector and the second current collector may be welded and connected to the first electrode tab of the first electrode plate and the second electrode tab of the second electrode plate, which are exposed to both the sides, respectively.

The case 130 may accommodate the electrode assembly 110. For example, the case 130 may be provided in a substantially rectangular parallelepiped to set a space for accommodating the electrode assembly 110 and the electrolyte therein, and an opening connecting external and internal spaces to each other is defined in one surface of a rectangular parallelepiped. The opening may allow the electrode assembly 110 to be inserted into the case 130.

In some embodiments, the , case 130 may be made of a metal such as aluminum, aluminum alloy, or nickel-plated steel, or a laminated film or plastic that constitutes the pouch.

The cap plate 150 may be installed in the opening of the case 130 to seal the opening of the case 130. For example, the case 130 and the cap plate 150 may be made of aluminum and welded to each other.

In some embodiments, the cap plate 150 may further include a terminal hole and an electrolyte injection port. The electrolyte injection port may allow the electrolyte to be injected into the case 130 after coupling and welding the cap plate 150 to the case 130.

Negative and positive terminals 151 and 152 may be electrically and mechanically connected to the electrode assembly 110 and installed in the terminal holes of the cap plate 150. In some embodiments, the negative and positive terminals 151 and 152 may be electrically connected to the negative and positive terminals of the electrode assembly 110, respectively. In some embodiments, the electrode assembly 110 may be withdrawn to the outside of the case 130 through the negative and positive terminals 151 and 152.

As illustrated in FIGS. 2 to 4, a support structure 170 may be disposed and fixed on a lower end of the electrode assembly 110. If the electrode assembly 110 is inserted into the case 130, the support structure 170 may be supported to be in contact with a lower bottom surface of the case 130. In some embodiments, if the electrode assembly 110 is accommodated in the case 130, a clearance may occur between the lower end of the electrode assembly 110 and the bottom surface of the case 130, and thus, the support structure 170 may be disposed in the clearance space to fill the empty space, thereby fixing the electrode assembly 110 inside the case 130 without being shaken and suppressing an occurrence of vibration in a height direction.

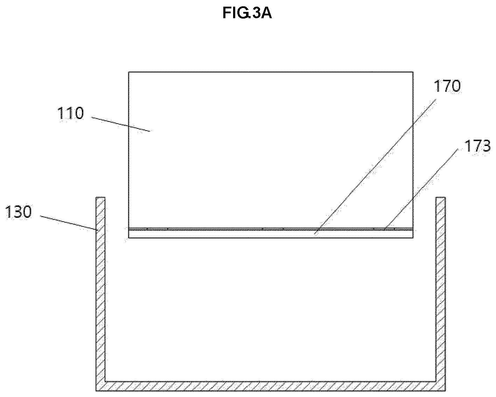

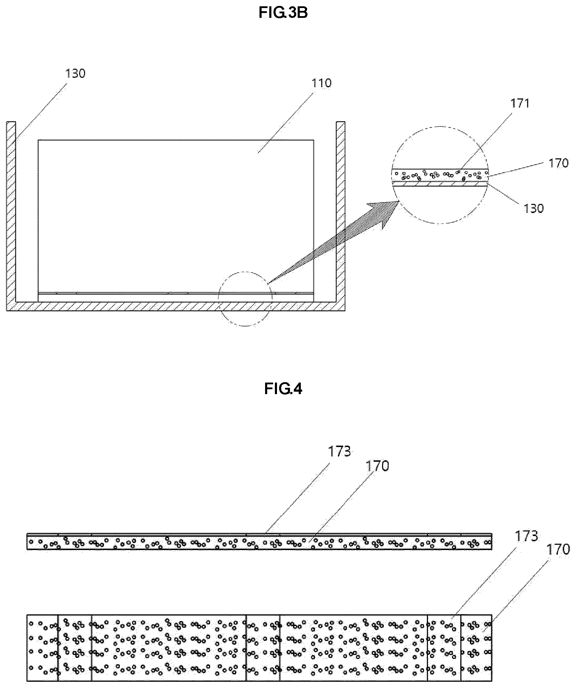

FIG. 2 illustrates an exploded perspective view of FIG. 1, FIGS. 3A and 3B illustrate schematic conceptual views of only the case, the electrode assembly, and the support structure in FIG. 1, and FIG. 4 illustrates cross-sectional and plan views of the support structure applied to the secondary battery according to embodiments. The support structure 170 will be described in detail with reference to the drawings.

First, the support structure 170 may have a planar shape corresponding to the lower end of the electrode assembly 110 and may have a height corresponding to the gap between the lower end of the electrode assembly 110 and the lower bottom surface of the case 130. The support structure 170 of the present disclosure may be configured to prevent the cap assembly from being bent if a high-capacity and high-weight electrode assembly stack is accommodated in the case 130 and may have a planar shape corresponding to the lower end of the electrode assembly 110 to uniformly support the electrode assembly 110 upward. Therefore, the electrode assembly 110 may be stably supported. In some embodiments, to minimize the occurrence of the vibration between the electrode assembly 110 and the case 130, the gap between the electrode assembly 110 and the case 130 may be intended to be filled with the support structure 170.

The support structure 170 may be made of a high-performance plastic material, especially engineering plastic. Engineering plastic may be high-performance plastic that is capable of replacing a metal and be characterized by excellent strength, impact resistance, abrasion resistance, heat resistance, cold resistance, and chemical resistance. In some embodiments, engineering plastic may have electrical insulating properties to maintain the insulation between the electrode assembly 110 and the case 130.

In some embodiments, engineering plastics have excellent elasticity. According to some embodiments of the present disclosure, the support structure 170 may be made of engineering plastic to provide the elasticity, and thus, if an impact or vibration occurs between the electrode assembly 110 and the case 130, the support structure 170 may serve to buffer the two components.

Polyamide (PA), polycarbonate (PC), polyethylene (PE), polypropylene (PP), polyimide (PI), polystyrene (PS), etc. may be used as engineering plastic.

The support structure 170 may be a porous component and have a plurality of pores 171 inside and in a surface thereof. Because the support structure 170 is disposed in the inner space of the case 130, the support structure 170 may be exposed to the electrolyte. As a result, because the support structure 170 is provided with the pores 171, the electrolyte may be impregnated into the pores 171. In some embodiments, as described above, the support structure 170 may have the elasticity due to the characteristics of the material thereof. As the support structure 170 has the pores 171, the support structure 170 may be more elastically deformed by an external pressure to more effectively provide the buffering function. According to some embodiments of the present disclosure, each pore 171 may have a diameter of about 10 mm or less, and the porosity may be about 70% or more.

A resin-based binder 173 may be applied to at least one place on a top surface of the support structure 170 and be bonded to the lower end of the electrode assembly 110. The resin binder 173 may adopt, for example, a silicone resin or an acrylic resin. The silicone-based or acrylic-based resins may have excellent adhesive properties. As illustrated in FIGS. 2 and 3A, the support structure 170 may be first attached to the lower end of the electrode assembly stack, and the electrode assembly 110 to which the support structure 170 is attached may be inserted into the case 130 and then be seated on the lower bottom surface of the case 130. The resin-based binder 173 may be applied to the top surface of the support structure 170 to serve to improve adhesion to the electrode assembly 110. As illustrated in the drawings, the resin-based binder 173 may be applied, for example, to three places at equal intervals, but is not limited thereto.

A major technical concern for electric vehicles is improving a driving range, and for this purpose, demands for high-capacity secondary batteries are increasing. However, one of the urgent limitations faced in manufacturing high-capacity batteries is a limitation of bending of the cap assembly due to the high load of the electrode assembly. The bending of the cap assembly causes welding failure between the case 130 and the cap assembly.

To solve these limitations, in the present disclosure, the support structure 170 may be additionally disposed below the high-capacity electrode assembly stack to fill the space between the case 130 and the stack 110. According to this configuration, as the stack is disposed and fixed inside the case 130, the movement or vibration of the stack may be suppressed, and the stability is improved, and the bending of the cap assembly may be suppressed due to the fixed support of the stack, and thus, the welding failure between the case 130 and the stack may be solved. Furthermore, the stack alignment may be improved by the adhesion between the support structure and the stack with the resin-based binder.

## Claims

1. A secondary battery comprising:
an electrode assembly comprising a first electrode plate, a second electrode plate, and a separator;
a case configured to accommodate the electrode assembly; and
a cap assembly coupled to an opened upper side of the case,
wherein a support structure is disposed and fixed to a lower end of the electrode assembly, and
the support structure is supported to be in contact with a lower bottom surface of the case.

2. The secondary battery as claimed in claim 1, wherein the electrode assembly is provided by repeatedly stacking the first electrode plate and the second electrode plate with the separator therebetween.

3. The secondary battery as claimed in claim 1, wherein the support structure has a planar shape corresponding to that of a lower end of the electrode assembly and has a height corresponding to a gap between the lower end of the electrode assembly and the lower bottom surface of the case.

4. The secondary battery as claimed in claim 1, wherein the support structure is made of a high-performance plastic material.

5. The secondary battery as claimed in claim 3, wherein the high-performance plastic material comprises engineering plastic.

6. The secondary battery as claimed in claim 4, wherein the support structure has pores, and
each of the pores has a diameter of about 10 mm or less.

7. The secondary battery as claimed in claim 1, wherein a resin-based binder is applied to at least one place on a top surface of the support structure to adhere to a lower end of the electrode assembly.
